# NEUE EUROPÄISCHE PATENTSCHRIFT

(11) **EP 3 404 338 B2**
(45) Veröffentlichungstag und Bekanntmachung des Hinweises auf die Entscheidung über den Einspruch: **03.04.2024**
(45) Hinweis auf die Patenterteilung: 21.04.2021
(21) Anmeldenummer: 18173082.1
(22) Anmeldetag: 18.05.2018
(51) Int. Cl.: F24F 13/28, F24F 3/16, B01D 46/00, F24F 1/0035, F24F 1/0071

(54) **LUFTBEHANDLUNGSVORRICHTUNG**
AIR TREATMENT DEVICE
DISPOSITIF DE TRAITEMENT DE L'AIR

(30) Priorität: 18.05.2017 DE 102017110860
(43) Veröffentlichungstag der Anmeldung: 21.11.2018
(73) Patentinhaber: Schilling Engineering GmbH, 79793 Wutöschingen (DE)
(72) Erfinder: Schilling, Günther, 79771 Klettgau (DE)
(74) Vertreter: Daub, Thomas

(56) Entgegenhaltungen:
- WO-A1-2009/156146
- DE-A1- 3 509 621
- DE-A1-102006 007 848
- US-A- 3 823 532
- US-A1- 2010 112 926

## Beschreibung

### Stand der Technik

Die Erfindung betrifft eine Luftbehandlungsvorrichtung, insbesondere eine Reinraum-Luftbehandlungsvorrichtung.

Es ist bereits eine Luftbehandlungsvorrichtung zur Luftbehandlung eines Raums vorgeschlagen worden, mit zumindest einer Außenluftleitung zu einem Ansaugen von Frischluft, mit zumindest einer Raumluftleitung zu einem Ansaugen von Raumluft aus dem Raum, mit zumindest einer Zuluftleitung zu einer Zuführung von Luft in den Raum und mit zumindest einer Luftbehandlungseinheit zu einer Aufbereitung einer über die Zuluftleitung zuzuführenden Luft aus der Frischluft und der Raumluft.

Die WO 2009/156146 A1 offenbart ein Luftbehandlungsvorrichtung mit den Merkmalen des Oberbegriffs von Anspruch 1. Die US 2010/0112926 A1 offenbart eine Lufbehandlungsvorrichtung für einen Reinraum mit einer Luftbehandlungskammer für die Filterung von Frischluft und einer weiteren Luftbehandlungskammer für die Luftbehandlung der zuzuführenden Luft.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird gemäß einem ersten Aspekt der Erfindung durch eine Luftbehandlungsvorrichtung mit den Merkmalen des Patentanspruchs 1 gelöst. Vorteilhafte Ausgestaltungen und Weiterbildungen der Erfindung sind in den abhängigen Ansprüchen definiert.

### Vorteile der Erfindung

Die Erfindung geht aus von einer Luftbehandlungsvorrichtung, insbesondere von einer Reinraum-Luftbehandlungsvorrichtung, zur Luftbehandlung eines Raums, mit zumindest einer Außenluftleitung zu einem Ansaugen von Frischluft, mit zumindest einer Raumluftleitung zu einem Ansaugen von Raumluft aus dem Raum mit zumindest einer Zuluftleitung zu einer Zuführung von Luft in den Raum und mit zumindest einer Luftbehandlungseinheit zu einer Aufbereitung einer über die Zuluftleitung zuzuführenden Luft aus der Frischluft und der Raumluft.

Es wird vorgeschlagen, dass die Luftbehandlungseinheit dazu vorgesehen ist, zumindest teilweise die Frischluft getrennt von der Raumluft aufzubereiten. Vorzugsweise ist der Raum insbesondere von einem in wenigstens einem Betriebszustand abgeschlossenen Raum, insbesondere von einem Reinraum, gebildet. Unter einer "Luftbehandlungsvorrichtung" soll in diesem Zusammenhang insbesondere eine Vorrichtung zu einer Aufbereitung einer Umgebungsluft in einem Raum, insbesondere in einem Reinraum, verstanden werden. Bevorzugt ist die Luftbehandlungsvorrichtung zu einer Entfeuchtung, einer Temperierung und/oder zu einer Reinigung einer dem Raum zuzuführenden Luft vorgesehen. Besonders bevorzugt bildet die Luftbehandlungsvorrichtung insbesondere einer Klimavorrichtung eines Reinraumsystems aus. Unter einem "Reinraumsystem" soll in diesem Zusammenhang insbesondere ein System verstanden werden, das zumindest einen Teil eines Reinraums und/oder einer Anordnung von Reinräumen umfasst. Grundsätzlich wäre jedoch auch denkbar, dass das Reinraumsystem lediglich Komponenten für einen Reinraum umfasst. Vorzugsweise herrschen in dem zumindest einen Reinraum Reinraumbedingungen. Dabei sollen unter "Reinraumbedingungen" insbesondere Bedingungen verstanden werden, die zur Bereitstellung eines Reinraums eingehalten werden müssen. Die Bedingungen können dabei insbesondere je nach Anwendungsgebiet und/oder Reinraumklasse variieren. Vorzugsweise sollen darunter insbesondere Bedingungen für einen Reinraum verstanden werden, die durch Normen, wie beispielsweise ISO 14644, ECSS-Q-ST-70-01, VDI 2083 und/oder EU-GMP, definiert sind. Unter einer "Außenluftleitung" soll in diesem Zusammenhang insbesondere eine Leitung zu einer Realisierung eines Außenlufteintrags verstanden werden. Vorzugsweise ist die Außenluftleitung zu einem Ansaugen von Umgebungsluft, insbesondere von Frischluft, mit einer Umgebung gekoppelt. Ferner soll in diesem Zusammenhang unter einer "Raumluftleitung" insbesondere eine Leitung verstanden werden, welche zu einem Ansaugen von Raumluft aus dem Raum vorgesehen ist. Vorzugsweise ist die Raumluftleitung direkt mit dem Raum gekoppelt. Des Weiteren soll in diesem Zusammenhang unter einer "Zuluftleitung" insbesondere eine Leitung verstanden werden, über welche dem Raum Luft, insbesondere frische und/oder gereinigte Luft, zugeführt werden kann. Unter einer "Luftbehandlungseinheit" soll in diesem Zusammenhang insbesondere eine Einheit verstanden werden, die zu einer direkten Aufbereitung einer Umgebungsluft in einem Raum, insbesondere in einem Reinraum, vorgesehen ist. Bevorzugt ist die Einheit zu einer direkten Entfeuchtung, einer Temperierung und/oder zu einer Reinigung einer dem Raum zuzuführenden Luft vorgesehen. Besonders bevorzugt bildet die Luftbehandlungseinheit insbesondere einen Klimaschrank eines Reinraumsystems aus. Darunter, dass die "Luftbehandlungseinheit dazu vorgesehen ist, zumindest teilweise die Frischluft getrennt von der Raumluft aufzubereiten" soll in diesem Zusammenhang insbesondere verstanden werden, dass die Luftbehandlungseinheit zu einer zumindest teilweise separaten Entfeuchtung, Temperierung und/oder Reinigung der Frischluft vorgesehen ist. Vorzugsweise soll darunter insbesondere verstanden werden, dass die Luftbehandlungseinheit zu einer zumindest temporär separaten Aufbereitung der Frischluft vor einer Zusammenführung mit der Raumluft vorgesehen ist. Vorzugsweise wird die Frischluft zumindest teilweise während einer Aufbereitung einer dem Raum zuzuführenden Luft separat zu der Raumluft aufbereitet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine vorteilhaft effiziente Luftbehandlungsvorrichtung bereitgestellt werden. Es kann insbesondere eine getrennte Luftaufbereitung erfolgen. Hierdurch kann insbesondere eine unnötige Aufbereitung, wie beispielsweise eine Entfeuchtung der Raumluft, vermieden werden. Hierdurch kann wiederum ein Energiebedarf der Luftbehandlungsvorrichtung gering gehalten werden.

Ferner wird vorgeschlagen, dass die Luftbehandlungseinheit eine erste Luftbehandlungskammer zu einer Temperierung der zuzuführenden Luft und zumindest eine zweite Luftbehandlungskammer zu einer von der Raumluft getrennten Aufbereitung der Frischluft aufweist. Unter einer "Luftbehandlungskammer" soll in diesem Zusammenhang insbesondere eine zumindest im Wesentlichen abgeschlossene Kammer mit einem Lufteingang, durch welchen in einem Betrieb Luft einströmen kann, und mit einem Luftausgang, durch welchen Luft in einem Betrieb ausströmen kann, verstanden werden. Vorzugsweise findet zwischen dem Lufteingang und dem Luftausgang in zumindest einem Betriebszustand eine Luftbehandlung, wie beispielweise eine Entfeuchtung, eine Temperierung und/oder eine Reinigung, statt. Unter "zumindest im Wesentlichen abgeschlossen" soll in diesem Zusammenhang insbesondere verstanden werden, dass zumindest 50%, vorzugsweise zumindest 70% und besonders bevorzugt zumindest 90% einer Fläche der die Kammer begrenzenden Außenhülle geschlossen ist. Vorzugsweise bildet ein ungeschlossener Teil der Außenhülle den Lufteingang und den Luftausgang aus. Dadurch kann insbesondere eine vorteilhaft zuverlässige Trennung der Luftströme erreicht werden. Es kann insbesondere eine von der Raumluft getrennten Aufbereitung der Frischluft erreicht werden. Hierdurch kann wiederum eine vorteilhaft effiziente Luftbehandlungsvorrichtung bereitgestellt werden.

Erfindungsgemäß wird vorgeschlagen, dass die Luftbehandlungseinheit zumindest ein Wärmepumpensystem aufweist, mit zumindest einem ersten Kühlkreislauf zu einer Temperierung der zuzuführenden Luft in der ersten Luftbehandlungskammer, und mit einem zweiten Kühlkreislauf und zumindest einem Heizkreislauf zu einer von der Raumluft getrennten Aufbereitung der Frischluft in der zweiten Luftbehandlungskammer. Vorzugsweise ist der Heizkreislauf dazu vorgesehen, die Frischluft zu temperieren, während der zweite Kühlkreislauf dazu vorgesehen ist, die Frischluft zu entfeuchten. Unter einem "Wärmepumpensystem" soll in diesem Zusammenhang insbesondere ein System mit zumindest zwei Temperierkreisläufen, insbesondere mit zumindest einem Kühlkreislauf und zumindest einem Heizkreislauf, verstanden werden. Vorzugsweise soll darunter insbesondere ein System verstanden werden, welches dazu vorgesehen ist, unter Aufwendung von technischer Arbeit, insbesondere eines Kompressors, thermische Energie eines ersten Mediums, insbesondere Luft, in einer ersten Kammer aufzunehmen und als Nutzwärme auf ein zweites Medium, insbesondere Luft, in einer zweiten Kammer zu übertragen. Vorzugsweise ist der zumindest eine Kühlkreislauf zu einer Aufnahme thermischer Energie vorgesehen, während der zumindest eine Heizkreislauf zu einer Abgabe thermischer Energie vorgesehen ist. Besonders bevorzugt ist der zumindest eine Kühlkreislauf wiederum dazu vorgesehen, eine aufgenommene thermische Energie an den Heizkreislauf zu übertragen. Unter einem "Kühlkreislauf" soll in diesem Zusammenhang insbesondere ein Kreislauf verstanden werden, der zu einer direkten Kühlung eines Mediums, insbesondere einer die Luftbehandlungseinheit durchströmenden Luft, vorgesehen ist. Vorzugsweise soll darunter insbesondere ein Wasserkreislauf verstanden werden, in welchem während eines Betriebs insbesondere ein Pumpenkaltwasser zirkuliert. Ferner soll unter einem "Heizkreislauf" in diesem Zusammenhang insbesondere ein Kreislauf verstanden werden, der zu einer direkten Erwärmung eines Mediums, insbesondere einer die Luftbehandlungseinheit durchströmenden Luft, vorgesehen ist. Vorzugsweise soll darunter insbesondere ein Wasserkreislauf verstanden werden, in welchem während eines Betriebs insbesondere ein Pumpenwarmwasser zirkuliert. Dadurch kann insbesondere eine vorteilhaft effiziente Luftbehandlungsvorrichtung bereitgestellt werden. Es kann insbesondere eine getrennte Luftaufbereitung bei gleichzeitiger energetischer Kopplung erfolgen. Hierdurch kann wiederum ein Energiebedarf der Luftbehandlungsvorrichtung gering gehalten werden.

Alternativ wird erfindungsgemäß vorgeschlagen, dass die Luftbehandlungseinheit zumindest ein Wärmepumpensystem aufweist, mit zumindest einem ersten Kühlkreislauf und zumindest einem Heizkreislauf zu einer Aufbereitung der zuzuführenden Luft in der ersten Luftbehandlungskammer, und mit einem zweiten Kühlkreislauf zu einer von der Raumluft getrennten Aufbereitung der Frischluft in der zweiten Luftbehandlungskammer. Vorzugsweise ist der Heizkreislauf dazu vorgesehen, die Raumluft zu temperieren, während der erste Kühlkreislauf dazu vorgesehen ist, die Raumluft zu entfeuchten und/oder zu temperieren und der zweite Kühlkreislauf dazu vorgesehen ist, die Frischluft zu entfeuchten. Dadurch kann insbesondere eine vorteilhaft effiziente Luftbehandlungsvorrichtung bereitgestellt werden. Es kann insbesondere eine getrennte Luftaufbereitung bei gleichzeitiger energetischer Kopplung erfolgen. Hierdurch kann wiederum ein Energiebedarf der Luftbehandlungsvorrichtung gering gehalten werden.

Erfindungsgemäß wird ferner vorgeschlagen, dass der erste Kühlkreislauf, der zweite Kühlkreislauf und der Heizkreislauf direkt thermisch gekoppelt sind. Vorzugsweise sind der erste Kühlkreislauf, der zweite Kühlkreislauf und der Heizkreislauf innerhalb des Wärmepumpensystems direkt thermisch gekoppelt. Vorzugsweise bilden der erste Kühlkreislauf, der zweite Kühlkreislauf und der Heizkreislauf eine Wärmepumpe aus. Es sind insbesondere verschiedene, einem Fachmann als sinnvoll erscheinende Arten der Kopplung der Kreisläufe des Wärmepumpensystems denkbar, wie beispielsweise die Verwendung eines Zwischenwärmetauschers als Verdampfer. Dadurch kann insbesondere eine vorteilhaft effiziente Luftbehandlungsvorrichtung bereitgestellt werden. Es kann insbesondere eine getrennte Luftaufbereitung bei gleichzeitiger energetischer Kopplung erfolgen. Hierdurch kann wiederum ein Energiebedarf der Luftbehandlungsvorrichtung gering gehalten werden.

Es wird weiter vorgeschlagen, dass der Heizkreislauf zu einem Beheizen und der zweite Kühlkreislauf zu einem Nachkühlen und Entfeuchten der Frischluft vorgesehen ist. Vorzugsweise erfolgt eine Entfeuchtung durch eine lokale, starke Abkühlung der Frischluft nach einem Aufheizen. Dadurch kann insbesondere eine vorteilhafte Aufbereitung der Frischluft erfolgen. Es kann insbesondere sowohl eine Temperierung als auch eine Entfeuchtung der Frischluft in der zweiten Luftbehandlungskammer erreicht werden. Hierdurch kann insbesondere eine vorteilhaft effiziente Aufbereitung der Frischluft erreicht werden.

Ferner wird vorgeschlagen, dass der erste Kühlkreislauf dazu vorgesehen ist, einer angesaugten Raumluft eine Abwärme zu entziehen. Hierdurch kann insbesondere eine gezielte Kühlung der Raumluft erreicht werden. Es kann insbesondere eine gezielte und bedarfsgerechte Temperierung der Raumluft erreicht werden. Es kann insbesondere erreicht werden, dass die Raumluft lediglich abgekühlt wird und nicht bereits mit der Frischluft vorab aufgeheizt wird. Dadurch kann insbesondere eine vorteilhaft effiziente Luftbehandlungsvorrichtung bereitgestellt werden. Hierdurch kann wiederum ein Energiebedarf der Luftbehandlungsvorrichtung gering gehalten werden.

Des Weiteren wird vorgeschlagen, dass der erste Kühlkreislauf und der zweite Kühlkreislauf direkt fluidtechnisch miteinander koppelbar ausgeführt sind. Vorzugsweise sind der erste Kühlkreislauf und der zweite Kühlkreislauf über zumindest ein Ventil und/oder zumindest eine Leitung direkt miteinander verbindbar. Unter "direkt fluidtechnisch miteinander koppelbar" soll in diesem Zusammenhang insbesondere verstanden werden, dass in zumindest einem Betriebszustand ein Fluidaustausch zwischen dem ersten Kühlkreislauf und dem zweiten Kühlkreislauf stattfindet. Bevorzugt sind ein Rücklauf des ersten Kühlkreislaufs und ein Rücklauf des zweiten Kühlkreislaufs permanent fluidtechnisch miteinander gekoppelt. Dadurch kann insbesondere eine vorteilhaft effiziente Luftbehandlungsvorrichtung bereitgestellt werden. Es kann insbesondere eine getrennte Luftaufbereitung bei gleichzeitiger energetischer Kopplung erfolgen.

Es wird ferner vorgeschlagen, dass das Wärmepumpensystem zumindest eine Pumpstation aufweist, über welche der erste Kühlkreislauf und der zweite Kühlkreislauf direkt fluidtechnisch miteinander koppelbar ausgeführt sind. Vorzugsweise ist die Pumpenstation zu einer Außenaufstellung vorgesehen. Bevorzugt weist die Pumpenstation zumindest ein Ventil auf, über welches ein Vorlauf des ersten Kühlkreislaufs mit einem Vorlauf des zweiten Kühlkreislaufs koppelbar ausgebildet ist. Besonders bevorzugt weist die Pumpenstation zumindest eine Pumpe auf, welche zu einem definierten Fluidaustausch zwischen dem ersten Kühlkreislauf und dem zweiten Kühlkreislauf vorgesehen ist. Die Begriffe "Vorlauf" und "Rücklauf" sind in diesem Zusammenhang insbesondere in Bezug auf einen Luftkühler und/oder Lufterhitzer des jeweiligen Kühlkreislaufs und/oder Heizkreislaufs zu verstehen. Dadurch kann insbesondere eine vorteilhaft effiziente Luftbehandlungsvorrichtung bereitgestellt werden. Es kann insbesondere eine getrennte Luftaufbereitung bei gleichzeitiger energetischer Kopplung erfolgen.

Des Weiteren wird vorgeschlagen, dass die zweite Luftbehandlungskammer mit der Außenluftleitung gekoppelt ist, und dazu vorgesehen ist von der Frischluft durchströmt zu werden. Vorzugsweise ist die zweite Luftbehandlungskammer dazu vorgesehen, lediglich von der Frischluft durchströmt zu werden. Die zweite Luftbehandlungskammer wird insbesondere nicht von der Raumluft durchströmt. Die zweite Luftbehandlungskammer ist insbesondere zu einer separaten Aufbereitung der Frischluft vorgesehen. Bevorzugt dient die zweite Luftbehandlungskammer zu einer Aufbereitung der Frischluft vor einer Zusammenführung mit der Raumluft. Dadurch kann insbesondere eine vorteilhaft effiziente Luftbehandlungsvorrichtung bereitgestellt werden. Es kann insbesondere eine getrennte Luftaufbereitung der Frischluft bei gleichzeitiger energetischer Kopplung erfolgen. Hierdurch kann wiederum ein Energiebedarf der Luftbehandlungsvorrichtung gering gehalten werden. Es kann insbesondere erreicht werden, dass die Frischluft gezielt und bedarfsgerecht temperiert und entfeuchtet werden kann.

Es wird ferner vorgeschlagen, dass die erste Luftbehandlungskammer mit der zweiten Luftbehandlungskammer, mit der Raumluftleitung und mit der Zuluftleitung gekoppelt ist, und dazu vorgesehen ist von der Frischluft und der Raumluft durchströmt zu werden. Vorzugsweise werden die Frischluft und die Raumluft in der ersten Luftbehandlungskammer zusammengeführt, wobei die Frischluft in einem Betrieb bereits aus der zweiten Luftbehandlungskammer in die erste Luftbehandlungskammer geleitet wird. Vorzugsweise bildet die zusammengeführte Frischluft und Raumluft eine dem Raum zuzuführende Luft aus. Dadurch kann insbesondere gezielt ein Mischungsverhältnis gesteuert werden. Ferner kann eine gemeinsame Aufbereitung der Frischluft und der Raumluft erreicht werden. Zudem kann insbesondere nochmals eine gezielte Temperierung erreicht werden. Dadurch kann insbesondere eine vorteilhaft effiziente Luftbehandlungsvorrichtung bereitgestellt werden. Hierdurch kann wiederum ein Energiebedarf der Luftbehandlungsvorrichtung gering gehalten werden.

Es wird weiter vorgeschlagen, dass die erste Luftbehandlungskammer dazu vorgesehen ist, die Frischluft und die Raumluft in die Zuluftleitung zu führen. Vorzugsweise ist die erste Luftbehandlungskammer dazu vorgesehen, die Frischluft und die Raumluft zusammenzuführen und anschließend als dem Raum zuzuführende Luft in die Zuluftleitung zu führen. Besonders bevorzugt ist in der ersten Luftbehandlungskammer dazu ein Ventilator und/oder ein Gebläse angeordnet. Dadurch kann insbesondere eine vorteilhafte Luftbehandlungsvorrichtung bereitgestellt werden. Es kann insbesondere eine Luftbehandlungskammer bereitgestellt werden, in welcher die Frischluft und die Raumluft vor einer Zuluftleitung gemeinsam aufbereitet werden können.

Ferner wird vorgeschlagen, dass die Luftbehandlungsvorrichtung zumindest eine Filtereinheit aufweist, welche zumindest ein während eines Betriebs austauschbares Filterwechselmodul mit einem Außenluft-Vorfilter aufweist. Unter einer "Filtereinheit" soll in diesem Zusammenhang insbesondere eine Einheit mit zumindest einem Filter verstanden werden, welcher zu einer Reinigung einer die Luftbehandlungskammer durchströmenden Luft vorgesehen ist. Vorzugsweise soll darunter insbesondere eine Einheit mit zumindest einem Luftfilter verstanden werden. Unter einem "während eines Betriebs austauschbaren Filterwechselmodul" soll in diesem Zusammenhang insbesondere ein Modul mit zumindest einem Filter verstanden werden, welches dazu vorgesehen ist, während eines Betriebs der Luftbehandlungsvorrichtung, insbesondere werkzeuglos, getauscht zu werden. Vorzugsweise soll darunter insbesondere ein Modul verstanden werden, welches ohne Betriebsunterbrechung aus der Luftbehandlungsvorrichtung entfernt und durch ein neues, insbesondere identisches, Modul ersetzt werden kann. Ferner soll in diesem Zusammenhang unter einem "Außenluft-Vorfilter" insbesondere ein Filter zu einer Vorreinigung der Außenluft bei einem Einströmen in die Luftbehandlungsvorrichtung verstanden werden. Es sind verschiedene, einem Fachmann als sinnvoll erscheinende Außenluft-Vorfilter denkbar, insbesondere soll darunter jedoch ein F7- und/oder ein F9-Luftfilter verstanden werden.

Des Weiteren wird vorgeschlagen, dass das zumindest eine Filterwechselmodul von einem Filterwechselschieber gebildet ist. Unter einem "Filterwechselschieber" soll in diesem Zusammenhang insbesondere ein in der Luftbehandlungsvorrichtung translatorisch geführtes Modul mit zumindest einem Filter verstanden werden, welches dazu vorgesehen ist, während eines Betriebs der Luftbehandlungsvorrichtung, insbesondere werkzeuglos, durch Herausziehen getauscht zu werden. Vorzugsweise soll darunter insbesondere ein translatorisch geführtes Modul verstanden werden, welches ohne Betriebsunterbrechung durch Herausziehen, insbesondere von außerhalb der Luftbehandlungsvorrichtung, aus der Luftbehandlungsvorrichtung entfernt und durch Einschieben eines neuen, insbesondere identischen, Moduls ersetzt werden kann. Dadurch kann insbesondere ein vorteilhaft leicht zu tauschendes Filterwechselmodul bereitgestellt werden. Dadurch kann insbesondere eine vorteilhaft effiziente Luftbehandlungsvorrichtung bereitgestellt werden.

Es wird ferner vorgeschlagen, dass das zumindest eine Filterwechselmodul zwischen der Außenluftleitung und der zweiten Luftbehandlungskammer angeordnet ist. Dadurch kann insbesondere eine vorteilhafte Anordnung des Filterwechselmoduls erreicht werden. Es kann insbesondere eine vorteilhafte Zugänglichkeit erreicht werden. Insbesondere kann dadurch bereits eine Verschmutzung der zweiten Luftbehandlungskammer vermieden werden. Es kann insbesondere eine Aufbereitung einer bereits vorgefilterten Frischluft in der zweiten Luftbehandlungskammer erreicht werden.

Ferner wird ein nicht erfindungsgemäßes Verfahren zum Betrieb der Luftbehandlungsvorrichtung offenbart. Es wird vorgeschlagen, dass Frischluft über eine Außenluftleitung angesaugt und in einer zweiten Luftbehandlungskammer separat mittels eines zweiten Kühlkreislaufs und zumindest eines Heizkreislaufs eines Wärmepumpensystems aufbereitet wird und anschließend in einer ersten Luftbehandlungskammer mit einer angesaugten Raumluft zusammengeführt wird. Dadurch kann insbesondere eine vorteilhaft effiziente Luftbehandlungsvorrichtung bereitgestellt werden. Es kann insbesondere eine getrennte Luftaufbereitung der Frischluft bei gleichzeitiger energetischer Kopplung erfolgen. Hierdurch kann wiederum ein Energiebedarf der Luftbehandlungsvorrichtung gering gehalten werden. Es kann insbesondere erreicht werden, dass die Frischluft gezielt und bedarfsgerecht temperiert und entfeuchtet werden kann. Ferner kann eine gemeinsame Aufbereitung der Frischluft und der Raumluft erreicht werden. Zudem kann insbesondere nochmals eine gezielte Temperierung erreicht werden. Dadurch kann insbesondere eine vorteilhaft effiziente Luftbehandlungsvorrichtung bereitgestellt werden. Hierdurch kann wiederum ein Energiebedarf der Luftbehandlungsvorrichtung gering gehalten werden.

Des Weiteren wird offenbart, dass der angesaugten Raumluft in der ersten Luftbehandlungskammer mittels eines ersten Kühlkreislaufs Abwärme entzogen wird. Hierdurch kann insbesondere eine gezielte Kühlung der Raumluft erreicht werden. Es kann insbesondere eine gezielte und bedarfsgerechte Temperierung der Raumluft erreicht werden. Es kann insbesondere erreicht werden, dass die Raumluft lediglich abgekühlt wird und nicht bereits mit der Frischluft vorab aufgeheizt wird. Dadurch kann insbesondere eine vorteilhaft effiziente Luftbehandlungsvorrichtung bereitgestellt werden. Hierdurch kann wiederum ein Energiebedarf der Luftbehandlungsvorrichtung gering gehalten werden.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: ein Reinraumsystem mit einem abgeschlossenen Raum und mit einer erfindungsgemäßen Luftbehandlungsvorrichtung in einer schematischen Darstellung,
- Fig. 2: ein schematisches Ablaufdiagramm eines Verfahrens zu einem Betrieb der erfindungsgemäßen Luftbehandlungsvorrichtung,
- Fig. 3: ein Reinraumsystem mit einem abgeschlossenen Raum und mit einer alternativen erfindungsgemäßen Luftbehandlungsvorrichtung in einer schematischen Darstellung,
- Fig. 4: einen Teil einer Luftbehandlungseinheit der alternativen erfindungsgemäßen Luftbehandlungsvorrichtung in einer schematischen Darstellung und
- Fig. 5: die alternative erfindungsgemäße Luftbehandlungsvorrichtung mit der Luftbehandlungseinheit, welche ein Wärmepumpensystem und ein Außengerät aufweist.

### Beschreibung des Ausführungsbeispiels

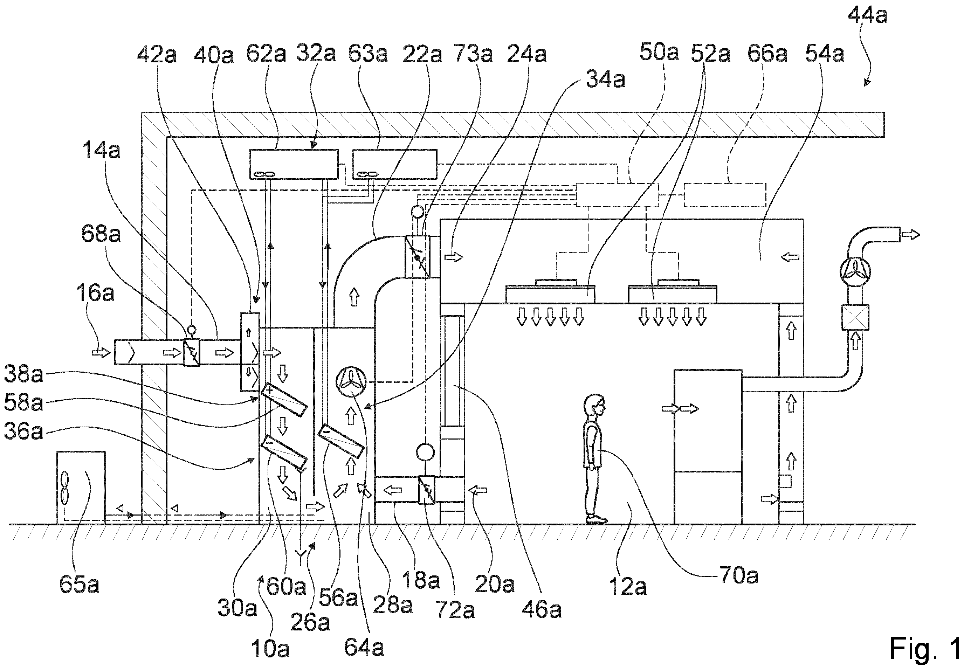

Die Figur 1 zeigt ein Reinraumsystem 44a. Das Reinraumsystem 44a weist einen in wenigstens einem Betriebszustand abgeschlossenen Raum 12a auf. Der Raum 12a ist als Reinraum ausgebildet. Grundsätzlich wäre jedoch auch denkbar, dass das Reinraumsystem 44a mehrere, vorzugsweise mehrere aneinander angrenzende, Reinräume umfasst. Das Reinraumsystem 44a ist hier in diesem Ausführungsbeispiel lediglich beispielhaft mit nur einem Raum 12a beschrieben, dies ist jedoch nicht als eine Einschränkung zu verstehen. Der Raum 12a ist in einem Gebäude angeordnet. Der Raum 12a weist beispielhaft ein nach außen gerichtetes Fenster 46a auf, über welches Tageslicht in den Raum 12a gelangen kann. Grundsätzlich wäre auch denkbar, dass der Raum 12a kein Fenster oder mehrere Fenster 46a aufweist. Die Figur 1 ist dabei lediglich schematisch dargestellt, eine Anordnung von Bauteilen muss dabei nicht einer realen Anordnung entsprechen. Eine Verdeckung des Fensters 46a ist dabei lediglich durch die Zweidimensionalität der Zeichnung bedingt. Der Raum 12a ist über eine nicht weiter sichtbare Zugangstüre von einer nicht weiter sichtbaren Schleuse aus zugänglich. Über die nicht weiter sichtbare Schleuse ist der Raum 12a von einer Umgebung aus zugänglich. Grundsätzlich wäre jedoch auch denkbar, dass der Raum 12a über die Zugangstüre mit einem weiteren Reinraum verbunden ist, welcher wiederum mit einer Schleuse verbunden ist.

Ferner weist das Reinraumsystem 44a eine Reinraumelektronikeinheit 50a auf. Die Reinraumelektronikeinheit 50a ist zu einer Bereitstellung von Reinraumbedingungen in dem Raum 12a vorgesehen. Die Reinraumelektronikeinheit 50a bildet eine Elektronik der Bauteile des Reinraumsystems 44a. Die Geräte des Reinraumsystems 44a die zu einer Bereitstellung von Reinraumbedingungen in dem Raum 12a vorgesehen sind, werden von der Reinraumelektronikeinheit 50a angesteuert. Die Reinraumelektronikeinheit 50a ist hier lediglich beispielhaft als zentrale Elektronik dargestellt, grundsätzlich wäre jedoch auch denkbar, dass die Reinraumelektronikeinheit 50a lediglich die einzelnen Elektroniken der Bauteile des Reinraumsystems 44a umfasst.

Des Weiteren weist das Reinraumsystem 44a eine Luftbehandlungsvorrichtung 10a zur Luftbehandlung des Raums 12a auf. Die Luftbehandlungsvorrichtung 10a ist von einer Reinraum-Luftbehandlungsvorrichtung gebildet. Die Luftbehandlungsvorrichtung 10a ist zu einer Versorgung des Raum 12a mit Frischluft 16a sowie zu einer Aufbereitung einer Raumluft 20a vorgesehen. Über die Luftbehandlungsvorrichtung 10a wird eine Feuchtigkeit und eine Temperatur in dem Raum 12a geregelt. Über die Luftbehandlungsvorrichtung 10a wird durch Absaugen und Zuführen von Luft 24a in dem Raum 12a eine Feuchtigkeit und eine Temperatur in dem Raum 12a geregelt. Die Luftbehandlungsvorrichtung 10a weist eine Außenluftleitung 14a zu einem Ansaugen von Frischluft 16a auf. Die Außenluftleitung 14a ist mit einem Ende mit einer Umgebung, wie beispielsweise einem Außenraum in der Nähe des Raums 12a, verbunden. Über die Außenluftleitung 14a kann Frischluft 16a angesaugt werden. Ferner weist die Luftbehandlungsvorrichtung 10a eine Raumluftleitung 18a zu einem Ansaugen von Raumluft 20a aus dem Raum 12a auf. Die Raumluftleitung 18a ist mit einem Ende direkt mit dem Raum 12a verbunden. Über die Raumluftleitung 18a kann ein Teil der Luft aus dem Raum 12a abgesaugt werden, um durch frische und/oder aufbereitete Luft 24a ersetzt zu werden. Des Weiteren weist die Luftbehandlungsvorrichtung 10a eine Zuluftleitung 22a zu einer Zuführung von Luft 24a in den Raum 12a auf. Die Zuluftleitung 22a ist mit einem Ende mit dem Raum 12a verbunden. Die Zuluftleitung 22a ist mit einem Ende mit dem Raum 12a verbunden. Die Filtereinheiten 52a dienen zu einer Filterung der zugeführten Luft 24a. Die Filtereinheiten 52a sind jeweils als Filter Fan Unit ausgebildet. Die Filtereinheiten 52a sind in einem über dem Raum 12a angeordneten Reinraum-Plenum 54a angeordnet. Die Filtereinheiten 52a weisen jeweils einen Filter und eine Ventilator auf, der Luft ansaugt und durch den Filter in den Raum 12a einbläst. Die Filtereinheiten 52a werden von der Reinraumelektronikeinheit 50a angesteuert. Die Ventilatoren der Filtereinheiten 52a werden von der Reinraumelektronikeinheit 50a angesteuert. Die Reinraumelektronikeinheit 50a bildet eine Elektronik der Filtereinheiten 52a. Eine Ansteuerung der Filtereinheiten 52a durch die Reinraumelektronikeinheit 50a wird abhängig von einer Partikelkonzentration und/oder einer Anzahl von Kontaminationsquellen in dem Raum 12a geregelt. Die Zuluftleitung 22a ist direkt mit dem Reinraum-Plenum 54a verbunden. Zudem wird ein Teil der Luft für die Filtereinheiten 52a in einer Wand des Raums 12a in das Reinraum-Plenum 54a und anschließend durch die Filtereinheiten 52a gesaugt. Der durch die Wand gesaugte Teil der Luft wird nicht durch die Luftbehandlungsvorrichtung 10a geleitet.

Die Luftbehandlungsvorrichtung 10a weist ferner eine Luftbehandlungseinheit 26a auf. Die Luftbehandlungseinheit 26a ist zu einer Aufbereitung einer über die Zuluftleitung 22a zuzuführenden Luft 24a aus der Frischluft 16a und der Raumluft 20a vorgesehen. Die Luftbehandlungseinheit 26a ist von einem Klimaschrank für einen Reinraum gebildet. Die Luftbehandlungseinheit 26a ist dazu vorgesehen, teilweise die Frischluft 16a getrennt von der Raumluft 20a aufzubereiten. Die Luftbehandlungseinheit 26a weist dazu zwei Luftbehandlungskammern 28a, 30a auf. Die Luftbehandlungskammern 28a, 30a sind direkt nebeneinander angeordnet. Die Luftbehandlungseinheit 26a weist eine erste Luftbehandlungskammer 28a zu einer Temperierung der zuzuführenden Luft 24a und eine zweite Luftbehandlungskammer 30a zu einer von der Raumluft 20a getrennten Aufbereitung der Frischluft 16a auf. Die erste Luftbehandlungskammer 28a ist mit der zweiten Luftbehandlungskammer 30a, mit der Raumluftleitung 18a und mit der Zuluftleitung 22a gekoppelt. Ferner ist die erste Luftbehandlungskammer 28a dazu vorgesehen von der Frischluft 16a und der Raumluft 20a durchströmt zu werden. Die zweite Luftbehandlungskammer 30a ist mit der Außenluftleitung 14a gekoppelt. Ferner ist die zweite Luftbehandlungskammer 30a mit der ersten Luftbehandlungskammer 28a gekoppelt. Ein Ausgang der zweiten Luftbehandlungskammer 30a ist mit einem Eingang der ersten Luftbehandlungskammer 28a gekoppelt. Die zweite Luftbehandlungskammer 30a ist dazu vorgesehen, von der Frischluft 16a durchströmt zu werden. Die zweite Luftbehandlungskammer 30a ist dazu vorgesehen, lediglich von der Frischluft 16a durchströmt zu werden.

Ferner weist die Luftbehandlungseinheit 26a ein Wärmepumpensystem 32a auf. Das Wärmepumpensystem 32a weist einen ersten Kühlkreislauf 34a zu einer Temperierung der zuzuführenden Luft 24a in der ersten Luftbehandlungskammer 28a auf. Der erste Kühlkreislauf 34a ist von einem Pumpenkaltwasserkreislauf des Wärmepumpensystems 32a gebildet. Der erste Kühlkreislauf 34a weist beispielsweise eine Temperatur von 18°C auf. Grundsätzlich kann eine Temperatur jedoch auch variieren. Der erste Kühlkreislauf 34a weist in der ersten Luftbehandlungskammer 28a einen Luftkühler 56a auf. Der Luftkühler 56a ist zu einer Kühlung der die erste Luftbehandlungskammer 28a durchströmenden Luft 24a vorgesehen. Über den Luftkühler 56a kann der Kühlkreislauf 34a thermische Energie der die erste Luftbehandlungskammer 28a durchströmenden Luft 24a aufnehmen. Der erste Kühlkreislauf 34a ist dazu vorgesehen, einer angesaugten Raumluft 20a eine Abwärme zu entziehen. Ferner weist das Wärmepumpensystem 32a einen zweiten Kühlkreislauf 36a und einen Heizkreislauf 38a zu einer von der Raumluft 20a getrennten Aufbereitung der Frischluft 16a in der zweiten Luftbehandlungskammer 30a. Der Heizkreislauf 38a ist von einem Pumpenwarmwasserkreislauf des Wärmepumpensystems 32a gebildet. Der Heizkreislauf 38a weist beispielsweise eine Temperatur von 50°C auf. Grundsätzlich kann eine Temperatur jedoch auch variieren. Der Heizkreislauf 38a weist in der zweiten Luftbehandlungskammer 30a einen Lufterhitzer 58a auf. Der Lufterhitzer 58a ist von einem Heizregister gebildet. Der Lufterhitzer 58a ist zu einer Erwärmung der die zweite Luftbehandlungskammer 30a durchströmenden Frischluft 16a vorgesehen. Über den Lufterhitzer 58a kann der Heizkreislauf 38a thermische Energie an die die zweite Luftbehandlungskammer 30a durchströmende Frischluft 16a abgeben. Der zweite Kühlkreislauf 36a ist von einem Pumpenkaltwasserkreislauf des Wärmepumpensystems 32a gebildet. Der zweite Kühlkreislauf 36a weist beispielsweise eine Temperatur von 6°C auf. Grundsätzlich kann eine Temperatur jedoch auch variieren. Der zweite Kühlkreislauf 36a weist in der zweiten Luftbehandlungskammer 30a einen Luftkühler 60a auf. Der Luftkühler 60a ist von einem Kühlregister gebildet. Der Luftkühler 60a des zweiten Kühlkreislaufs 36a ist in Strömungsrichtung der Frischluft 16a hinter dem Lufterhitzer 58a des Heizkreislaufs 38a angeordnet. Der Luftkühler 60a ist zu einer lokalen Kühlung der erwärmten, die zweite Luftbehandlungskammer 30a durchströmenden Frischluft 16a vorgesehen. Durch die lokale Kühlung kondensiert die Feuchtigkeit in der Frischluft 16a ab und die Frischluft 16a wird entfeuchtet. Der Heizkreislauf 38a ist zu einem Beheizen und der zweite Kühlkreislauf 36a zu einem Nachkühlen und Entfeuchten der Frischluft 16a vorgesehen ist.

Der erste Kühlkreislauf 34a, der zweite Kühlkreislauf 36a und der Heizkreislauf 38a sind direkt thermisch gekoppelt. Das Wärmepumpensystem 32a weist eine Wärmepumpe 62a auf, über welche der erste Kühlkreislauf 34a, der zweite Kühlkreislauf 36a und der Heizkreislauf 38a thermisch gekoppelt sind. Der erste Kühlkreislauf 34a, der zweite Kühlkreislauf 36a und der Heizkreislauf 38a bilden die Wärmepumpe 62a aus. Die Kühlkreisläufe 34a, 36a sind dazu innerhalb der Luftbehandlungskammern 28a, 30a zu einer Aufnahme thermischer Energie vorgesehen, während der Heizkreislauf 38a in der zweiten Luftbehandlungskammer 30a zu einer Abgabe thermischer Energie vorgesehen ist. In der Wärmepumpe 62a sind die Kühlkreisläufe 34a, 36a wiederum dazu vorgesehen, eine aufgenommene thermische Energie an den Heizkreislauf 38a zu übertragen. Unter Aufwendung von technischer Arbeit, insbesondere eines nicht weiter sichtbaren Kompressors der Wärmepumpe 62a, kann die Wärmepumpe 62a die Kühlkreisläufe 34a, 36a und den Heizkreislauf 38a zu einer Übertragung thermischer Energie auf ein ähnliches Temperaturniveau anheben, um die Übertragung zu ermöglichen. Ferner weist das Wärmepumpensystem 32a eine Freecooling-Einheit 63a auf, welche zu einer zusätzlichen Abkühlung des ersten Kühlkreislaufs 34a vorgesehen ist. Kann nicht ausreichend Abwärme an den Heizkreislauf 38a abgegeben werden, kann die Freecooling-Einheit 63a bedarfsweise dazu genutzt werden, insbesondere durch Abgabe von Abwärme an eine Umgebung, dem ersten Kühlkreislauf 34a Wärme zu entziehen.

Die Frischluft 16a wird über die Außenluftleitung 14a in die zweite Luftbehandlungskammer 30a gesaugt. Von der zweiten Luftbehandlungskammer 30a gelangt die Frischluft 16a in die erste Luftbehandlungskammer 28a. In der ersten Luftbehandlungskammer 28a wird die Frischluft 16a mit der Raumluft 20a zusammengeführt. Die erste Luftbehandlungskammer 28a ist dazu vorgesehen, die Frischluft 16a und die Raumluft 20a in die Zuluftleitung 22a zu führen. Die erste Luftbehandlungskammer 28a ist dazu vorgesehen, die Frischluft 16a und die Raumluft 20a zusammenzuführen und anschließend als dem Raum 12a zuzuführende Luft 24a in die Zuluftleitung 22a zu führen. Die erste Luftbehandlungskammer 28a weist dazu einen Ventilator 64a auf. Der Ventilator 64a ist zu einem Ansaugen der Frischluft 16a und der Raumluft 20a sowie zu einem anschließenden Ausblasen der Luft 24a in die Zuluftleitung 22a vorgesehen.

Des Weiteren weist die Luftbehandlungsvorrichtung 10a eine Filtereinheit 40a auf. Die Filtereinheit 40a ist zu einer Vorfilterung der Frischluft 16a vorgesehen. Die Filtereinheit 40a weist ein während eines Betriebs austauschbares Filterwechselmodul 42a mit einem Außenluft-Vorfilter auf. Der Außenluft-Vorfilter ist beispielhaft von einem F7- und/oder einen F9-Luftfilter gebildet. Das Filterwechselmodul 42a ist von einem Filterwechselschieber gebildet. Das Filterwechselmodul 42a ist dazu vorgesehen, während eines Betriebs der Luftbehandlungsvorrichtung 10a werkzeuglos getauscht zu werden. Das Filterwechselmodul 42a kann ohne Betriebsunterbrechung aus der Luftbehandlungsvorrichtung 10a entfernt und durch ein neues, insbesondere identisches, Modul ersetzt werden kann. Das Filterwechselmodul 42a ist zwischen der Außenluftleitung 14a und der zweiten Luftbehandlungskammer 30a angeordnet. Zu einem Wechseln kann das Filterwechselmodul 42a von außerhalb der Luftbehandlungsvorrichtung 10a aus einer nicht weiter sichtbaren Führung in der Außenluftleitung 14a herausgezogen und ersetzt werden.

Des Weiteren weist die Luftbehandlungseinheit 26a ein Außengerät 65a auf. Das Außengerät 65a dient als Wärmetauscher für die Luftbehandlungseinheit 26a.

Ferner weist das Reinraumsystem 44a eine Recheneinheit 66a auf. Die Recheneinheit 66a ist zu einer nutzungs- und verbrauchsgeführten Regelung der Reinraumelektronikeinheit 50a vorgesehen. Die Recheneinheit 66a ist dazu vorgesehen, eine Form der Ansteuerung der Geräte des Reinraumsystems 44a durch die Reinraumelektronikeinheit 50a zu regeln. Über die Recheneinheit 66a wird eine Ansteuerung nutzungs- und verbrauchsgeführt geregelt.

Die Recheneinheit 66a ist unter anderem dazu vorgesehen, abhängig von einer Personenpräsenz und einer Personenanzahl in dem Raum 12a einen Außenlufteintrag zu regeln. Ein Außenlufteintrag wird über die Außenluftleitung 14a der Luftbehandlungsvorrichtung 10a erreicht. Ein durch die Außenluftleitung 14a bereitgestellter Außenlufteintrag kann über eine in der Außenluftleitung 14a befindliche Drosselklappe 68a gesteuert werden. Die Drosselklappe 68a weist einen Motor auf, der über die Reinraumelektronikeinheit 50a angesteuert wird. Die Reinraumelektronikeinheit 50a bildet eine Elektronik des Motors. Eine Ansteuerung der Drosselklappe 68a durch die Reinraumelektronikeinheit 50a wird abhängig von einer Personenpräsenz und einer Personenanzahl in dem Raum 12a durch die Recheneinheit 66a geregelt. Befinden sich keine Personen 70a in dem Raum 12a, kann ein Außenlufteintrag auf null gebracht werden. In dieser Zeit wird keine Frischluft benötigt. Mit steigender Personenanzahl steigt auch ein Frischluftbedarf und es wird durch die Recheneinheit 66a ein Außenlufteintrag erhöht. Der Außenlufteintrag wird dabei gemäß Arbeitsstättenrichtlinien geregelt. Durch den angepassten Außenlufteintrag wird nur so viel Energie für eine Aufbereitung der Außenluft benötigt, wie unbedingt erforderlich. Insbesondere außerhalb der Betriebszeiten kann so ein auf eine Aufbereitung der Außenluft und damit auch auf eine dafür benötigte Energie verzichtet werden. Ferner wird zudem ein Raumlufteintrag in die Luftbehandlungsvorrichtung 10a mittels der Recheneinheit 66a gesteuert. Die Raumluftleitung 18a weist dazu eine Drosselklappe 72a auf. Ein durch die Raumluftleitung 18a bereitgestellter Raumlufteintrag in die Luftbehandlungsvorrichtung 10a kann über die Drosselklappe 72a gesteuert werden. Die Drosselklappe 72a weist einen Motor auf, der über die Reinraumelektronikeinheit 50a angesteuert wird. Die Reinraumelektronikeinheit 50a bildet eine Elektronik des Motors. Des Weiteren weist auch die Zuluftleitung 22a eine Drosselklappe 73a auf. Eine durch die Zuluftleitung 22a in das Reinraum-Plenum 54a zugeführte Luft 24a kann über die Drosselklappe 73a gesteuert werden. Die Drosselklappe 73a weist einen Motor auf, der über die Reinraumelektronikeinheit 50a angesteuert wird. Die Reinraumelektronikeinheit 50a bildet eine Elektronik des Motors.

Bei einem Verfahren zum Betrieb der Luftbehandlungsvorrichtung 10a wird die Luftbehandlungsvorrichtung 10a nutzungs- und verbrauchsgeführt von der Recheneinheit 66a geregelt. Die Recheneinheit 66a regelt dabei eine Leistung der Luftbehandlungsvorrichtung 10a abhängig von einer Nutzung des Raums 12a bedarfsgerecht. Das Verfahren beschreibt dabei eine Funktionsweise der Luftbehandlungsvorrichtung 10a.

In dem Verfahren wird Frischluft 16a über die Außenluftleitung 14a angesaugt und in der zweiten Luftbehandlungskammer 30a separat mittels dem zweiten Kühlkreislauf 36a und dem Heizkreislauf 38a des Wärmepumpensystems 32a aufbereiten und anschließend in der ersten Luftbehandlungskammer 28a mit der angesaugten Raumluft 20a zusammengeführt. Dazu wird in einem ersten Verfahrensschritt 74a Frischluft 16a über die Außenluftleitung 14a angesaugt. Ein Ansaugen erfolgt dabei mittels des Ventilators 64a in der ersten Luftbehandlungskammer 28a. Anschließend wird die Frischluft 16a in einem zweiten Verfahrensschritt 76a durch die Filtereinheit 40a gesaugt und vorgereinigt. Darauffolgend wird die Frischluft 16a in einem dritten Verfahrensschritt 78a in die zweite Luftbehandlungskammer 30a gesaugt. In der zweiten Luftbehandlungskammer 30a findet eine Vorbehandlung der Frischluft 16a statt. Dabei wird die Frischluft 16a mittels des zweiten Kühlkreislaufs 36a und des Heizkreislaufs 38a des Wärmepumpensystems 32a erwärmt, gekühlt und entfeuchtet. Die Erwärmung, Kühlung und Entfeuchtung der Frischluft 16a erfolgt über das Wärmepumpensystem 32a mittels Abwärmenutzung des Raums 12a. Die Erwärmung findet mittels des Lufterhitzers 58a des Heizkreislaufs 38a statt. Ferner findet eine Kühlung sowie eine Entfeuchtung mittels des Luftkühlers 60a des zweiten Kühlkreislaufs 36a statt. Anschließend wird die Frischluft 16a in einem vierten Verfahrensschritt 80a in die erste Luftbehandlungskammer 28a gesaugt. Gleichzeitig wird Raumluft 20a über die Raumluftleitung 18a aus dem Raum 12a ebenfalls in die erste Luftbehandlungskammer 28a gesaugt. Ein Ansaugen der Raumluft 20a erfolgt dabei ebenfalls mittels des Ventilators 64a in der ersten Luftbehandlungskammer 28a. Die Raumluft 20a und die Frischluft 16a werden in der ersten Luftbehandlungskammer 28a zusammengeführt. Darauffolgend wird in einem fünften Verfahrensschritt 82a der angesaugten Raumluft 20a in der ersten Luftbehandlungskammer 28a mittels eines ersten Kühlkreislaufs34 Abwärme entzogen. Dazu wird die zusammengeführte Raumluft 20a und Frischluft 16a mittels des ersten Kühlkreislaufs 34a gekühlt. Eine Kühlung findet mittels des Luftkühlers 56a statt. In der ersten Luftbehandlungskammer 28a findet eine Reinraumluftbehandlung statt. In der ersten Luftbehandlungskammer 28a wird die zuzuführende Luft 24a behandelt. Dazu wird mittels des Wärmepumpensystems 32a die zuzuführende Luft 24a gekühlt und minimal nachbefeuchtet. Anschließend wird die behandelte Luft 24a in einem sechsten Verfahrensschritt 84a mittels des Ventilators 64a in die Zuluftleitung 22a geblasen. Von der Zuluftleitung 22a aus gelangt die Luft 24a in einem siebten Verfahrensschritt 86a in das Reinraum-Plenum 54a, von wo aus die Luft 24a von den Filtereinheiten 52a ansaugt und durch die Filter der Filtereinheiten 52a in den Raum 12a eingeblasen wird. Das Verfahren findet dabei während eines Betriebs kontinuierlich statt, sodass die Verfahrensschritte 74a, 76a, 78a, 80a, 82a, 84a, 86a während des Betriebs fortlaufend und parallel durchgeführt werden. Der beschriebene Ablauf ist daher lediglich beispielhaft entlang der Strömungsrichtung der Frischluft 16a beschrieben.

Das Verfahren umfasst die Vorbehandlung der Frischluft 16a mittel der Abwärmenutzung des Raums 12a, indem der angesaugten Raumluft 20a die Abwärme entzogen wird. Dabei findet eine direkte Wärmezuführung über das Wärmepumpensystem 32a zum Beheizen sowie zum Nachkühlen und Entfeuchten der Frischluft 16a statt. In einem Sommerbetrieb könnte ebenfalls die Abwärme des Lufterhitzers 58a des Heizkreislaufs 38a gleich wieder über das Wärmepumpensystem 32a dem Luftkühler 60a des zweiten Kühlkreislaufs 36a für die Luftentfeuchtung zugeführt werden. In der nachgeschalteten ersten Luftbehandlungskammer 28a wird nur noch die Wärmelast, wie beispielsweise der Prozesse, der Beleuchtung, etc., abgeführt. Hier könnte beispielsweise im Winterbetrieb bei erforderlicher Frischluftbeheizung die im Wärmepumpensystem 32a anstehende Kälte zur Kühlung des Raums 12a verwendet werden.

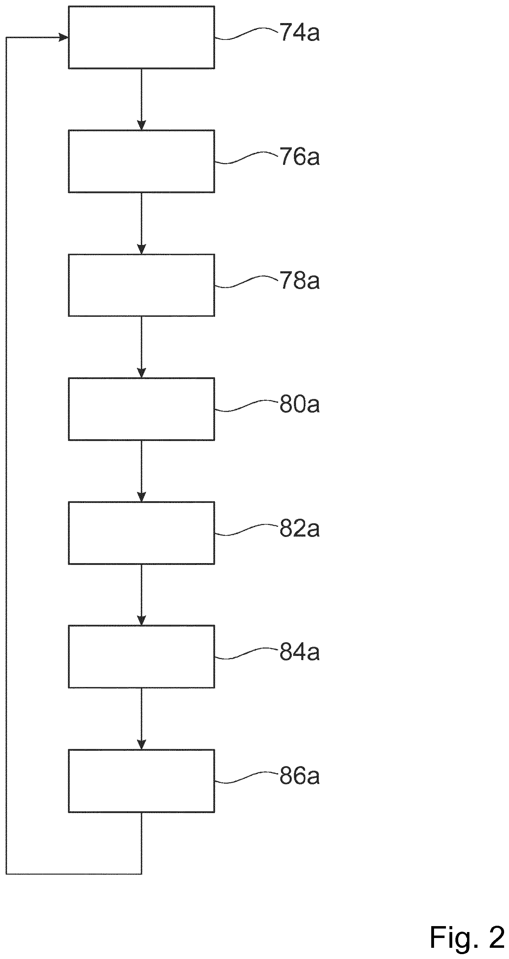

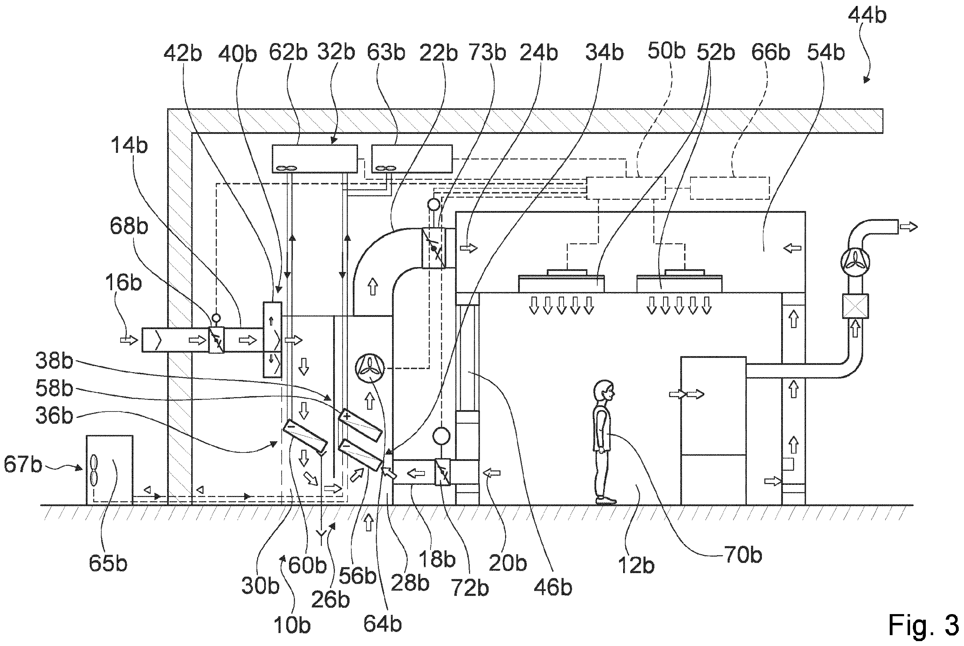

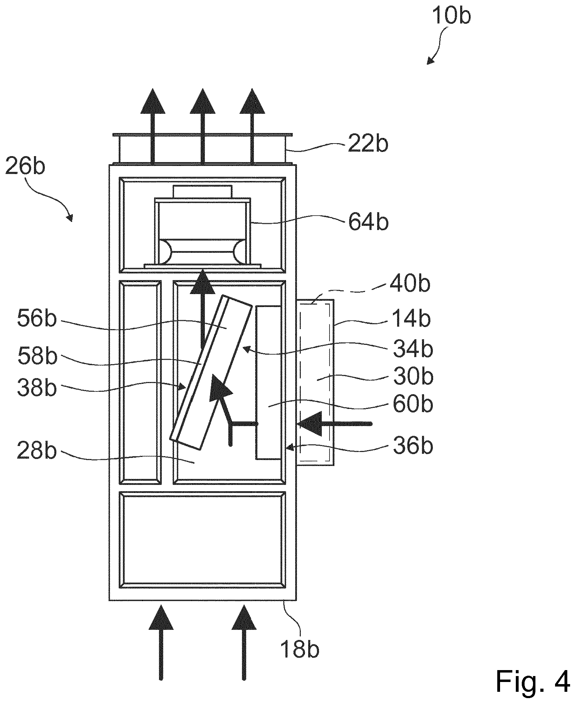

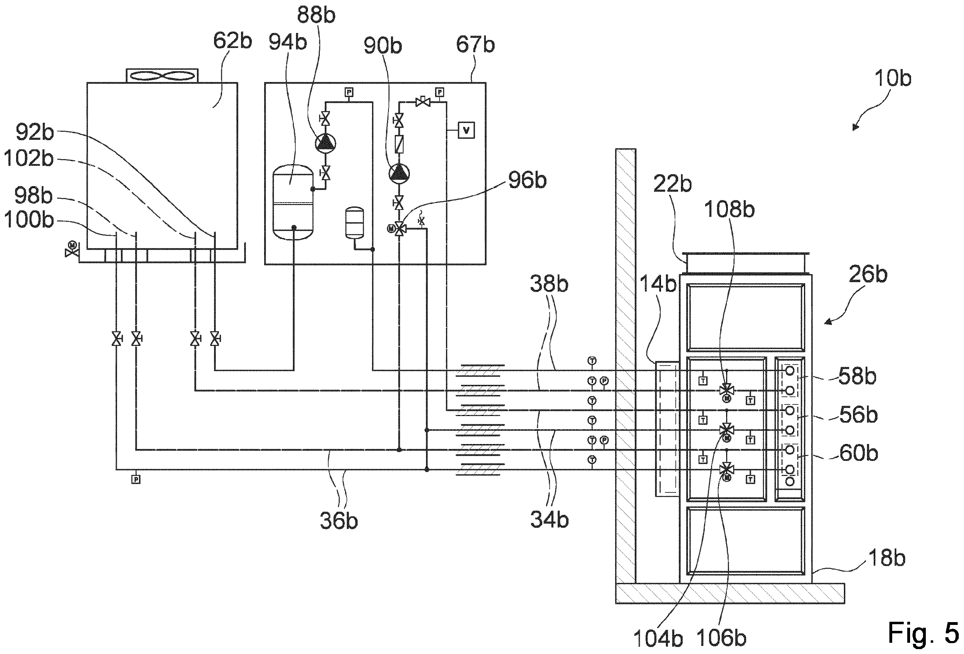

In den Figuren 3 bis 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 und 2 verwiesen werden kann. Zur Unterscheidung der Ausführungsbeispiele ist der Buchstabe a in den Bezugszeichen des Ausführungsbeispiels in den Figuren 1 und 2 durch den Buchstaben b in den Bezugszeichen des Ausführungsbeispiels der Figuren 3 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 und 2 verwiesen werden.

Die Figur 3 zeigt ein Reinraumsystem 44b. Das Reinraumsystem 44b weist einen in wenigstens einem Betriebszustand abgeschlossenen Raum 12b auf. Der Raum 12b ist als Reinraum ausgebildet. Ferner weist das Reinraumsystem 44b eine Reinraumelektronikeinheit 50b auf. Die Reinraumelektronikeinheit 50b ist zu einer Bereitstellung von Reinraumbedingungen in dem Raum 12b vorgesehen.

Des Weiteren weist das Reinraumsystem 44b eine Luftbehandlungsvorrichtung 10b zur Luftbehandlung des Raums 12b auf. Die Luftbehandlungsvorrichtung 10b ist von einer Reinraum-Luftbehandlungsvorrichtung gebildet. Die Luftbehandlungsvorrichtung 10b ist zu einer Versorgung des Raum 12b mit Frischluft 16b sowie zu einer Aufbereitung einer Raumluft 20b vorgesehen. Über die Luftbehandlungsvorrichtung 10b wird eine Feuchtigkeit und eine Temperatur in dem Raum 12b geregelt. Über die Luftbehandlungsvorrichtung 10b wird durch Absaugen und Zuführen von Luft 24b in dem Raum 12b eine Feuchtigkeit und eine Temperatur in dem Raum 12b geregelt. Die Luftbehandlungsvorrichtung 10b weist eine Außenluftleitung 14b zu einem Ansaugen von Frischluft 16b auf. Ferner weist die Luftbehandlungsvorrichtung 10b eine Raumluftleitung 18b zu einem Ansaugen von Raumluft 20b aus dem Raum 12b auf. Die Raumluftleitung 18b ist mit einem Ende direkt mit dem Raum 12b verbunden. Des Weiteren weist die Luftbehandlungsvorrichtung 10b eine Zuluftleitung 22b zu einer Zuführung von Luft 24b in den Raum 12b auf. Die Zuluftleitung 22b ist mit einem Ende über Filtereinheiten 52b mit dem Raum 12b verbunden. Die Filtereinheiten 52b dienen zu einer Filterung der zugeführten Luft 24b. Die Filtereinheiten 52b sind jeweils als Filter Fan Unit ausgebildet. Die Filtereinheiten 52b werden von der Reinraumelektronikeinheit 50b angesteuert.

Die Luftbehandlungsvorrichtung 10b weist ferner eine Luftbehandlungseinheit 26b auf. Die Luftbehandlungseinheit 26b ist zu einer Aufbereitung einer über die Zuluftleitung 22b zuzuführenden Luft 24b aus der Frischluft 16b und der Raumluft 20b vorgesehen. Die Luftbehandlungseinheit 26b ist von einem Klimaschrank für einen Reinraum gebildet. Die Luftbehandlungseinheit 26b ist dazu vorgesehen, teilweise die Frischluft 16b getrennt von der Raumluft 20b aufzubereiten. Die Luftbehandlungseinheit 26b weist dazu zwei Luftbehandlungskammern 28b, 30b auf. Die Luftbehandlungskammern 28b, 30b sind direkt nebeneinander angeordnet. Die Luftbehandlungseinheit 26b weist eine erste Luftbehandlungskammer 28b zu einer Aufbereitung der zuzuführenden Luft 24b und eine zweite Luftbehandlungskammer 30b zu einer von der Raumluft 20b getrennten Aufbereitung der Frischluft 16b auf. Die erste Luftbehandlungskammer 28b ist mit der zweiten Luftbehandlungskammer 30b, mit der Raumluftleitung 18b und mit der Zuluftleitung 22b gekoppelt. Ferner ist die erste Luftbehandlungskammer 28b dazu vorgesehen, von der Frischluft 16b und der Raumluft 20b durchströmt zu werden. Die zweite Luftbehandlungskammer 30b ist mit der Außenluftleitung 14b gekoppelt. Ferner ist die zweite Luftbehandlungskammer 30b mit der ersten Luftbehandlungskammer 28b gekoppelt. Ein Ausgang der zweiten Luftbehandlungskammer 30b ist mit einem Eingang der ersten Luftbehandlungskammer 28b gekoppelt. Die zweite Luftbehandlungskammer 30b ist dazu vorgesehen, von der Frischluft 16b durchströmt zu werden. Die zweite Luftbehandlungskammer 30b ist dazu vorgesehen, lediglich von der Frischluft 16b durchströmt zu werden.

Ferner weist die Luftbehandlungseinheit 26b ein Wärmepumpensystem 32b auf. Das Wärmepumpensystem 32b weist einen ersten Kühlkreislauf 34b und einen Heizkreislauf 38b zu einer Temperierung der zuzuführenden Luft 24b in der ersten Luftbehandlungskammer 28b auf. Der erste Kühlkreislauf 34b ist von einem Pumpenkaltwasserkreislauf des Wärmepumpensystems 32b gebildet. Der erste Kühlkreislauf 34b weist beispielhaft eine Temperatur zwischen 12°C und 18°C auf. Grundsätzlich kann eine Temperatur jedoch auch variieren. Der erste Kühlkreislauf 34b weist ferner beispielhaft eine Kühlleistung von 7 kW auf. Der erste Kühlkreislauf 34b weist in der ersten Luftbehandlungskammer 28b einen Luftkühler 56b auf. Der Luftkühler 56b ist zu einer Kühlung der die erste Luftbehandlungskammer 28b durchströmenden Luft 24b vorgesehen. Der Luftkühler 56b ist von einem Kühlregister gebildet. Über den Luftkühler 56b kann der Kühlkreislauf 34b thermische Energie der die erste Luftbehandlungskammer 28b durchströmenden Luft 24b aufnehmen. Der erste Kühlkreislauf 34b ist dazu vorgesehen, einer angesaugten Raumluft 20b eine Abwärme zu entziehen. Ferner weist der Luftkühler 56b eine Kondenswasserrinne auf, über welche an dem Luftkühler 56b kondensierendes Wasser abgeführt werden kann. Der Heizkreislauf 38b ist von einem Pumpenwarmwasserkreislauf des Wärmepumpensystems 32b gebildet. Der Heizkreislauf 38b weist beispielsweise eine Temperatur zwischen 35°C und 50°C auf. Grundsätzlich kann eine Temperatur jedoch auch variieren. Der Heizkreislauf 38b weist ferner beispielhaft eine Heizleistung von 12 kW auf. Der Heizkreislauf 38b weist in der ersten Luftbehandlungskammer 28b einen Lufterhitzer 58b auf. Der Lufterhitzer 58b ist von einem Heizregister gebildet. Der Lufterhitzer 58b ist zu einer Erwärmung der zuzuführenden Luft 24b in der ersten Luftbehandlungskammer 28b vorgesehen. Über den Lufterhitzer 58b kann der Heizkreislauf 38b thermische Energie an die zuzuführenden Luft 24b in der ersten Luftbehandlungskammer 28b abgeben.

Ferner weist das Wärmepumpensystem 32b einen zweiten Kühlkreislauf 36b zu einer von der Raumluft 20b getrennten Aufbereitung der Frischluft 16b in der zweiten Luftbehandlungskammer 30b auf. Der zweite Kühlkreislauf 36b ist von einem Pumpenkaltwasserkreislauf des Wärmepumpensystems 32b gebildet. Der zweite Kühlkreislauf 36b weist beispielsweise eine Temperatur zwischen 6°C und 12°C auf. Grundsätzlich kann eine Temperatur jedoch auch variieren. Der zweite Kühlkreislauf 36b weist ferner beispielhaft eine Kühlleistung von 11 kW auf. Der zweite Kühlkreislauf 36b weist in der zweiten Luftbehandlungskammer 30b einen Luftkühler 60b auf. Der Luftkühler 60b ist von einem Kühlregister gebildet. Der Luftkühler 60b des zweiten Kühlkreislaufs 36b ist direkt an einem Eingang der ersten Luftbehandlungskammer 28b angeordnet. Der Luftkühler 60b ist zu einer lokalen Kühlung der die zweite Luftbehandlungskammer 30b durchströmenden Frischluft 16b vorgesehen. Durch die lokale Kühlung kondensiert die Feuchtigkeit in der Frischluft 16b ab und die Frischluft 16b wird entfeuchtet. Der Luftkühler 60b weist dazu eine Kondenswasserrinne auf, über welche an dem Luftkühler 60b kondensierendes Wasser abgeführt werden kann.

Der erste Kühlkreislauf 34b, der zweite Kühlkreislauf 36b und der Heizkreislauf 38b sind direkt thermisch gekoppelt. Das Wärmepumpensystem 32b weist eine Wärmepumpe 62b und eine Pumpenstation 67b auf, über welche der erste Kühlkreislauf 34b, der zweite Kühlkreislauf 36b und der Heizkreislauf 38b thermisch gekoppelt sind. Die Pumpenstation 67b ist in einem Außengerät 65b der Luftbehandlungseinheit 26b aufgenommen. Die Luftbehandlungseinheit 26b weist das Außengerät 65b auf. Die Pumpenstation 67b weist daher eine Außenaufstellung auf. Die Pumpenstation 67b dient als Wärmetauscher für die Luftbehandlungseinheit 26b. Die Pumpenstation 67b umfasst eine erste Pumpe 88b, welche als Warmwasserpumpe ausgebildet ist, und eine zweite Pumpe 90b, welche als Kaltwasserpumpe ausgebildet ist. Eine Eingangsseite der ersten Pumpe 88b ist über einen Pufferspeicher 94b mit einem Brauchwasseraustritt 92b der Wärmepumpe 32b verbunden. Eine Ausgangsseite der ersten Pumpe 88b ist mit einem Vorlauf des Lufterhitzers 58b des Heizkreislaufs 38b verbunden. Die erste Pumpe 88b ist zu einem Antrieb des Heizkreislaufs 38b vorgesehen. Ferner ist eine Eingangsseite der zweiten Pumpe 90b mit einem Mehrwegventil 96b verbunden. Das Mehrwegventil 96b ist über eine erste Leitung mit einem Vorlauf des Luftkühlers 60b des zweiten Kühlkreislaufs 36b und mit einem Vorlauf 98b der Wärmepumpe 32b verbunden und über eine zweite Leitung mit einem Rücklauf des Luftkühlers 56b des ersten Kühlkreislaufs 34b, mit einem Rücklauf 100b der Wärmepumpe 32b und mit einem Rücklauf des Luftkühlers 60b des zweiten Kühlkreislaufs 36b verbunden. Eine Ausgangsseite der zweiten Pumpe 90b ist mit einem Vorlauf des Luftkühlers 56b des ersten Kühlkreislaufs 34b verbunden. Die zweite Pumpe 90b ist zu einem definierten Fluidaustausch zwischen dem ersten Kühlkreislauf 34b und dem zweiten Kühlkreislauf 36b vorgesehen. Des Weiteren weist die Wärmepumpe 32b einen Brauchwasseranschluss 102b auf, über welchen die Wärmepumpe 32b mit dem Rücklauf des Lufterhitzers 58b des Heizkreislaufs 38b verbunden ist.

Die Luftbehandlungseinheit 26a weist ferner drei Mehrwegventile 104b, 106b, 108b auf, über welche der Luftkühler 56b des ersten Kühlkreislaufs 34b, der Luftkühler 60b des zweiten Kühlkreislaufs 36b und der Lufterhitzer 58b des Heizkreislaufs 38b jeweils überbrückt werden können.

Die Kühlkreisläufe 34b, 36b sind innerhalb der Luftbehandlungskammern 28b, 30b zu einer Aufnahme thermischer Energie vorgesehen, während der Heizkreislauf 38b in der zweiten Luftbehandlungskammer 30b zu einer Abgabe thermischer Energie vorgesehen ist. In der Wärmepumpe 62b sind die Kühlkreisläufe 34b, 36b wiederum dazu vorgesehen, eine aufgenommene thermische Energie an den Heizkreislauf 38b zu übertragen. Unter Aufwendung von technischer Arbeit, insbesondere eines nicht weiter sichtbaren Kompressors der Wärmepumpe 62b, kann die Wärmepumpe 62b die Kühlkreisläufe 34b, 36b und den Heizkreislauf 38b zu einer Übertragung thermischer Energie auf ein ähnliches Temperaturniveau anheben, um die Übertragung zu ermöglichen.

Die Frischluft 16b wird über die Außenluftleitung 14b in die zweite Luftbehandlungskammer 30b gesaugt. Von der zweiten Luftbehandlungskammer 30b gelangt die Frischluft 16b in die erste Luftbehandlungskammer 28b. In der ersten Luftbehandlungskammer 28b wird die Frischluft 16b mit der Raumluft 20b zusammengeführt. Die erste Luftbehandlungskammer 28b ist dazu vorgesehen, die Frischluft 16b und die Raumluft 20b in die Zuluftleitung 22b zu führen. Die erste Luftbehandlungskammer 28b ist dazu vorgesehen, die Frischluft 16b und die Raumluft 20b zusammenzuführen und anschließend als dem Raum 12b zuzuführende Luft 24b in die Zuluftleitung 22b zu führen. Die erste Luftbehandlungskammer 28b weist dazu einen Ventilator 64b auf. Der Ventilator 64b ist zu einem Ansaugen der Frischluft 16b und der Raumluft 20b sowie zu einem anschließenden Ausblasen der Luft 24b in die Zuluftleitung 22b vorgesehen.

Des Weiteren weist die Luftbehandlungsvorrichtung 10b eine Filtereinheit 40b auf. Die Filtereinheit 40b ist zu einer Vorfilterung der Frischluft 16b vorgesehen. Die Filtereinheit 40b weist ein während eines Betriebs austauschbares Filterwechselmodul 42b mit einem Außenluft-Vorfilter auf.

## Patentansprüche

1. Luftbehandlungsvorrichtung, insbesondere Reinraum-Luftbehandlungsvorrichtung, zur Luftbehandlung eines Raums (12a; 12b), mit zumindest einer Außenluftleitung (14a; 14b) zu einem Ansaugen von Frischluft (16a; 16b), mit zumindest einer Raumluftleitung (18a; 18b) zu einem Ansaugen von Raumluft (20a; 20b) aus dem Raum (12a; 12b), mit zumindest einer Zuluftleitung (22a; 22b) zu einer Zuführung von Luft (24a; 24b) in den Raum (12a; 12b) und mit zumindest einer Luftbehandlungseinheit (26a; 26b) zu einer Aufbereitung einer über die Zuluftleitung (22a; 22b) zuzuführenden Luft (24a; 24b) aus der Frischluft (16a; 16b) und der Raumluft (20a; 20b),
wobei
die Luftbehandlungseinheit (26a; 26b) dazu vorgesehen ist, zumindest teilweise die Frischluft (16a; 16b) getrennt von der Raumluft (20a; 20b) aufzubereiten, wobei die Luftbehandlungseinheit (26a; 26b) eine erste Luftbehandlungskammer (28a; 28b) zu einer Temperierung der zuzuführenden Luft (24a; 24b) und zumindest eine zweite Luftbehandlungskammer (30a; 30b) zu einer von der Raumluft (20a; 20b) getrennten Aufbereitung der Frischluft (16a; 16b) aufweist,
**dadurch gekennzeichnet, dass** die Luftbehandlungseinheit (26a) zumindest ein Wärmepumpensystem (32a) aufweist, mit zumindest einem ersten Kühlkreislauf (34a) zu einer Temperierung der zuzuführenden Luft (24a) in der ersten Luftbehandlungskammer (28a), und mit einem zweiten Kühlkreislauf (36a) und zumindest einem Heizkreislauf (38a) zu einer von der Raumluft (20a) getrennten Aufbereitung der Frischluft (16a) in der zweiten Luftbehandlungskammer (30a) oder dass die Luftbehandlungseinheit (26b) zumindest ein Wärmepumpensystem (32b) aufweist, mit zumindest einem ersten Kühlkreislauf (34b) und zumindest einem Heizkreislauf (38b) zu einer Aufbereitung der zuzuführenden Luft (24b) in der ersten Luftbehandlungskammer (28b), und mit einem zweiten Kühlkreislauf (36b) zu einer von der Raumluft (20b) getrennten Aufbereitung der Frischluft (16b) in der zweiten Luftbehandlungskammer (30b), wobei der erste Kühlkreislauf (34a; 34b), der zweite Kühlkreislauf (36a; 36b) und der Heizkreislauf (38a; 38b) direkt thermisch gekoppelt sind.

2. Luftbehandlungsvorrichtung nach Anspruch 1,
**dadurch gekennzeichnet, dass**
der Heizkreislauf (38a) zu einem Beheizen und der zweite Kühlkreislauf (36a) zu einem Nachkühlen und Entfeuchten der Frischluft (16a) vorgesehen ist.

3. Luftbehandlungsvorrichtung nach einem der Ansprüche 1 oder 2, **dadurch gekennzeichnet, dass**
der erste Kühlkreislauf (34a; 34b) dazu vorgesehen ist, einer angesaugten Raumluft (20a; 20b) eine Abwärme zu entziehen.

4. Luftbehandlungsvorrichtung zumindest nach Anspruch 1,
**dadurch gekennzeichnet, dass**
der erste Kühlkreislauf (34b) und der zweite Kühlkreislauf (36b) direkt fluidtechnisch miteinander koppelbar ausgeführt sind.

5. Luftbehandlungsvorrichtung nach Anspruch 4,
**dadurch gekennzeichnet, dass**
das Wärmepumpensystem (32b) zumindest eine Pumpstation (67b) aufweist, über welche der erste Kühlkreislauf (34b) und der zweite Kühlkreislauf (36b) direkt fluidtechnisch miteinander koppelbar ausgeführt sind.

6. Luftbehandlungsvorrichtung zumindest nach Anspruch 1,
**dadurch gekennzeichnet, dass**
die zweite Luftbehandlungskammer (30a; 30b) mit der Außenluftleitung (14a; 14b) gekoppelt ist und dazu vorgesehen ist, von der Frischluft (16a; 16b) durchströmt zu werden.

7. Luftbehandlungsvorrichtung zumindest nach Anspruch 1,
**dadurch gekennzeichnet, dass**
die erste Luftbehandlungskammer (28a; 28b) mit der zweiten Luftbehandlungskammer (30a; 30b), mit der Raumluftleitung (18a; 18b) und mit der Zuluftleitung (22a; 22b) gekoppelt ist und dazu vorgesehen ist, von der Frischluft (16a; 16b) und der Raumluft (20a; 20b) durchströmt zu werden.

8. Luftbehandlungsvorrichtung zumindest nach Anspruch 1,
**dadurch gekennzeichnet, dass**
die erste Luftbehandlungskammer (28a; 28b) dazu vorgesehen ist, die Frischluft (16a; 16b) und die Raumluft (20a; 20b) in die Zuluftleitung (22a; 22b) zu führen.

9. Luftbehandlungsvorrichtung nach einem der vorhergehenden Ansprüche,
**gekennzeichnet durch**
zumindest eine Filtereinheit (40a; 40b), welche zumindest ein während eines Betriebs austauschbares Filterwechselmodul (42a; 42b) mit einem Außenluft-Vorfilter aufweist, wobei das zumindest eine Filterwechselmodul (42a; 42b) ohne Betriebsunterbrechung aus der Luftbehandlungsvorrichtung entfernt und durch ein neues, insbesondere identisches, Modul ersetzbar ist.

10. Luftbehandlungsvorrichtung nach Anspruch 9,
**dadurch gekennzeichnet, dass**
das zumindest eine Filterwechselmodul (42a; 42b) von einem Filterwechselschieber gebildet ist, der ein translatorisch geführtes Modul ist, welches ohne Betriebsunterbrechung durch Herausziehen, insbesondere von außerhalb der Luftbehandlungsvorrichtung, aus der Luftbehandlungsvorrichtung entfernt und durch Einschieben eines neuen, insbesondere identischen, Moduls ersetzbar ist.

11. Luftbehandlungsvorrichtung zumindest nach Anspruch 1 und 9,
**dadurch gekennzeichnet, dass**
das zumindest eine Filterwechselmodul (42a; 42b) zwischen der Außenluftleitung (14a; 14b) und der zweiten Luftbehandlungskammer (30a; 30b) angeordnet ist.

## Claims

1. Air treatment device, in particular clean room air treatment device, for an air treatment of a room (12a; 12b),
with at least one outside air conduit (14a; 14b) for suctioning fresh air (16a; 16b), with at least one ambient air conduit (18a; 18b) for suctioning ambient air (20a; 20b) from the room (12a; 12b),
with at least one incoming air conduit (22a; 22b) for feeding air (24a; 24b) into the room (12a; 12b) and
with at least one air treatment unit (26a; 26b) for a conditioning of air (24a; 24b) that is to be fed in via the incoming air conduit (22a; 22b) and is implemented of the fresh air (16a; 16b) and the ambient air (20a; 20b),
wherein the air treatment unit (26a; 26b) is configured to at least partially condition the fresh air (16a; 16b) separately from the ambient air (20a; 20b),
wherein the air treatment unit (26a; 26b) comprises a first air treatment chamber (28a; 28b) for a tempering of the air that is to be fed in (24a; 24b) and comprises at least one second air treatment chamber (30a; 30b) for conditioning the fresh air (16a; 16b) separately from the ambient air (20a; 20b),
**characterised in that**
the air treatment unit (26a) comprises at least one heat pump system (32a) with at least one first cooling circuit (34a) for a tempering of the air that is to be fed in (24a) in the first air treatment chamber (28a), and with a second cooling circuit (36a) and at least one heating circuit (38a) for conditioning the fresh air (16a) separately from the ambient air (20a) in the second air treatment chamber (30a), or the air treatment unit (26b) comprises at least one heat pump system (32b) with at least one first cooling circuit (34b) and at least one heating circuit (38b) for a conditioning of the air that is to be fed in (24b) in the first air treatment chamber (28b),
and with a second cooling circuit (36b) for conditioning the fresh air (16b) separately from the ambient air (20b) in the second air treatment chamber (30b), wherein the first cooling circuit (34a; 34b), the second cooling circuit (36a; 36b) and the heating circuit (38a; 38b) are directly coupled thermally.

2. Air treatment device according to claim 1,
**characterised in that** the heating circuit (38a) is configured for a heating of the fresh air (16a) and the second cooling circuit (36a) is configured for an aftercooling and dehumidifying of the fresh air (16a).

3. Air treatment device according to one of claims 1 or 2,
**characterised in that** the first cooling circuit (34a; 34b) is configured to extract waste heat from a suctioned ambient air (20a; 20b).

4. Air treatment device at least according to claim 1,
**characterised in that** the first cooling circuit (34b) and the second cooling circuit (36b) are realized such that they are directly fluidically couplable with each other.

5. Air treatment device according to claim 4,
**characterised in that** the heat pump system (32b) comprises at least one pump station (67b), via which the first cooling circuit (34b) and the second cooling circuit (36b) are realized such that they are directly fluidically couplable with each other.

6. Air treatment device at least according to claim 1,
**characterised in that** the second air treatment chamber (30a; 30b) is coupled with the outside air conduit (14a; 14b) and is configured to be flowed through by the fresh air (16a; 16b).

7. Air treatment device at least according to claim 1,
**characterised in that** the first air treatment chamber (28a; 28b) is coupled with the second air treatment chamber (30a; 30b), with the ambient air conduit (18a; 18b) and with the incoming air conduit (22a; 22b) and is configured to be flowed through by the fresh air (16a; 16b) and the ambient air (20a; 20b).

8. Air treatment device at least according to claim 1,
**characterised in that** the first air treatment chamber (28a; 28b) is configured to feed the fresh air (16a; 16b) and the ambient air (20a; 20b) into the incoming air conduit (22a; 22b).

9. Air treatment device according to one of the preceding claims,
**characterised by** at least one filter unit (40a; 40b) comprising at least one filter exchange module (42a; 42b), which is exchangeable during operation and which comprises an outside air pre-filter,
wherein the at least one filter exchange module (42a; 42b) is, without interrupting an operation, removable from the air treatment device and replaceable by a new, in particular identical, module.

10. Air treatment device according to claim 9,
**characterised in that** the at least one filter exchange module (42a; 42b) is implemented by a filter exchange slider that is a translationally guided module, which is, without interrupting an operation, removable by extraction from the air treatment device, in particular from outside the air treatment device, and by an insertion of a new, in particular identical, module.

11. Air treatment device at least according to claims 1 and 9,
**characterised in that** the at least one filter exchange module (42a; 42b) is arranged between the outside air conduit (14a; 14b) and the second air treatment chamber (30a; 30b).

## Revendications

1. Dispositif de traitement de l'air, en particulier dispositif de traitement de l'air de salle blanche, pour un traitement de l'aire d'un local (12a ; 12b),
avec au moins un conduit d'air extérieur (14a ; 14b) pour une aspiration de l'air frais (16a ; 16b),
avec au moins un conduit d'air ambiant (18a ; 18b) pour une aspiration de l'air ambiant (20a ; 20b) du local (12a ; 12b),
avec au moins un conduit d'air arrivant (22a ; 22b) pour une alimentation de l'air (24a ; 24b) dans le local (12a ; 12b) et
avec au moins une unité de traitement de l'air (26a ; 26b) pour un conditionnement d'un air (24a ; 24b) qui est implémenté de l'air frais (16a ; 16b) et de l'air ambiant (20a ; 20b) et qui est à alimenter par le biais du conduit d'air arrivant (22a ; 22b), où l'unité de traitement de l'air (26a ; 26b) est prévue pour au moins partiellement conditionner l'air frais (16a ; 16b) séparément de l'air ambiant (20a ; 20b),
où l'unité de traitement de l'air (26a ; 26b) comporte une première chambre de traitement de l'air (28a ; 28b) pour tempérer l'air qui est à alimenter (24a ; 24b) et au moins une deuxième chambre de traitement de l'air (30a ; 30b) pour conditionner l'air frais (16a ; 16b) séparément de l'air ambiant (20a ; 20b),
**caractérisé en ce que**
l'unité de traitement de l'air (26a) comprend au moins un système à pompe thermique (32a) avec au moins un premier circuit de refroidissement (34a) pour tempérer l'air qui est à alimenter (24a) dans la première chambre de traitement de l'air (28a), et avec un deuxième circuit de refroidissement (36a) et avec au moins un circuit de chauffage (38a) pour conditionner l'air frais (16a) séparément de l'air ambiant (20a) dans la deuxième chambre de traitement de l'air (30a),
ou que l'unité de traitement de l'air (26b) comprend au moins un système à pompe thermique (32b) avec au moins un premier circuit de refroidissement (34b) et au moins un circuit de chauffage (38b) pour conditionner l'air qui est à alimenter (24b) dans la première chambre de traitement de l'air (28b), et avec un deuxième circuit de refroidissement (36b) pour conditionner l'air frais (16b) séparément de l'air ambiant (20b) dans la deuxième chambre de traitement de l'air (30b), où le premier circuit de refroidissement (34a ; 34b), le deuxième circuit de refroidissement (36a ; 36b) et le circuit de chauffage (38a ; 38b) sont directement couplés thermiquement.

2. Dispositif de traitement de l'air selon la revendication 1,
**caractérisé en ce que** le circuit de chauffage (38a) est configuré pour un chauffage de l'air frais (16a) et le deuxième circuit de refroidissement (36a) est configuré pour un refroidissement postérieur et une déshumidification de l'air frais (16a).

3. Dispositif de traitement de l'air selon l'une des revendications 1 ou 2,
**caractérisé en ce que** le premier circuit de refroidissement (34a ; 34b) est configuré pour extraire une chaleur perdue de l'air ambiant (20a ; 20b) aspiré.

4. Dispositif de traitement de l'air au moins selon la revendication 1,
**caractérisé en ce que** le premier circuit de refroidissement (34b) et le deuxième circuit de refroidissement (36b) sont réalisés tels qu'ils peuvent être couplés directement de manière fluidique.

5. Dispositif de traitement de l'air selon la revendication 4,
**caractérisé en ce que** le système à pompe thermique (32b) comprend au moins une station de pompage (67b), par le biais de laquelle le premier circuit de refroidissement (34b) et le deuxième circuit de refroidissement (36b) sont réalisés tels qu'ils peuvent être couplés directement de manière fluidique.

6. Dispositif de traitement de l'air au moins selon la revendication 1,
**caractérisé en ce que** la deuxième chambre de traitement de l'air (30a ; 30b) est couplée avec le conduit d'air extérieur (14a ; 14b) et est configurée à être parcourue par l'air frais (16a ; 16b).

7. Dispositif de traitement de l'air au moins selon la revendication 1,
**caractérisé en ce que** la première chambre de traitement de l'air (28a ; 28b) est couplée avec la deuxième chambre de traitement de l'air (30a ; 30b), avec le conduit d'air ambiant (18a ; 18b) et avec le conduit d'air arrivant (22a ; 22b) et est configurée à être parcourue par l'air frais (16a ; 16b) et l'air ambiant (20a ; 20b).

8. Dispositif de traitement de l'air au moins selon la revendication 1,
**caractérisé en ce que** la première chambre de traitement de l'air (28a ; 28b) est configurée pour alimenter l'air frais (16a ; 16b) et l'air ambiant (20a ; 20b) dans le conduit d'air arrivant (22a ; 22b).

9. Dispositif de traitement de l'air au moins selon l'une quelconque des revendications précédentes,
**caractérisé par** au moins une unité de filtrage (40a ; 40b) qui peut être échangée pendant une opération et qui comprend au moins un module échange-filtre (42a ; 42b) avec un préfiltre de l'air extérieur,
où l'au moins un module échange-filtre (42a ; 42b) peut être enlevé du dispositif de traitement de l'air et remplacé par un module nouveau, en particulier identique, sans interruption de l'opération.

10. Dispositif de traitement de l'air selon la revendication 9,
**caractérisé en ce que** l'au moins un module échange-filtre (42a ; 42b) est implémenté par une glissière échange-filtre qui est un module translationnellement guidé, ledit module étant enlevable du dispositif de traitement de l'air, en particulier de l'extérieur du dispositif de traitement de l'air, par extraction et étant remplaçable par insertion d'un module nouveau, en particulier identique sans interruption de l'opération.

11. Dispositif de traitement de l'air au moins selon les revendications 1 et 9,
**caractérisé en ce que** l'au moins un module échange-filtre (42a ; 42b) est disposé entre le conduit d'air extérieur (14a ; 14b) et la deuxième chambre de traitement de l'air (30a ; 30b).
